# EUROPÄISCHE PATENTSCHRIFT

(11) **EP 3 858 782 B1**
(45) Veröffentlichungstag und Bekanntmachung des Hinweises auf die Patenterteilung: **28.01.2026**
(21) Anmeldenummer: 21161841.8
(22) Anmeldetag: 04.10.2016
(51) Int. Cl.: B66D 1/34

(54) **SEILTROMMEL SOWIE FASERSEILTRIEB MIT EINER SOLCHEN SEILTROMMEL**
CABLE DRUM AND FIBRE CABLE DRIVE WITH SUCH A CABLE DRUM
TAMBOUR À CÂBLE, AINSI QU'ENTRAÎNEMENT À CÂBLES EN FIBRE DOTÉ D'UN TEL TAMBOUR À CÂBLE

(30) Priorität: 05.10.2015 DE 102015012819
(43) Veröffentlichungstag der Anmeldung: 04.08.2021
(62) Teilanmeldung aus: 16775473.8
(73) Patentinhaber: Liebherr-Components Biberach GmbH, 88400 Biberach/Riss (DE)
(72) Erfinder: Mupende, Ilaka, 89231 Neu-Ulm (DE); Hausladen, Norbert, 88400 Biberach (DE); Kreyssig, Steven, 88454 Hochdorf (DE); Horst, Nikolaj, 89584 Ehingen (DE); Zerza, Horst, 88400 Biberach an der Riß (DE)
(74) Vertreter: Lorenz Seidler Gossel Part. mbB

(56) Entgegenhaltungen:
- WO-A1-2012/100939
- DE-C- 895 082
- US-A- 2 846 162

## Beschreibung

Die vorliegende Erfindung betrifft allgemein mit hochfesten Faserseilen arbeitende Seiltriebe wie beispielsweise Kranhubwerke, Auslegerverstellwerke, Katzfahrwerke und dergleichen. Die Erfindung betrifft dabei insbesondere eine Seiltrommel für einen solchen Faserseiltrieb, mit einem Trommelkorpus zum Aufwickeln des Faserseils, den Trommelkorpus einfassende Bordscheiben sowie einer Seilendbefestigungsvorrichtung zum Befestigen eines Seilendes an der Seiltrommel.

Eine Seiltrommel nach dem Oberbegriff des Anspruchs 1 ist aus der Schrift US 2,846,162 A bekannt. Eine ähnliche Seiltrommel zeigt die Schrift DE 895082 C.

Seit geraumer Zeit wird in der Hebetechnik und insbesondere bei Kranen versucht, die üblichen, schweren Stahlseile durch hochfeste Faserseile zu ersetzen, die aus hochfesten Kunstfasern wie beispielsweise Aramidfasern (HMPA), Aramid/Kohlefasergemischen, hochmodularen Polyethylenfasern (HMPE), oder Poly(p-phenylene-2,6-benzobisoxazole)-Fasern (PBO) bestehen oder zumindest derartige Fasern aufweisen. Durch die Gewichtsersparnis gegenüber Stahlseilen kann die Traglast bzw. die zulässige Hublast erhöht werden, da das für die Traglast zu berücksichtigte Eigengewicht des Seils geringer ist. Gerade bei Kranen mit großer Hubhöhe, oder in Auslegern oder Mastverstellwerken mit Flaschenzügen hoher Einscherungszahl kommen beträchtliche Seillängen und damit auch ein entsprechendes Seilgewicht zustande, so dass die durch hochfeste Faserseile mögliche Gewichtsreduzierung sehr vorteilhaft ist. Zusätzlich zum Gewichtsvorteil des Faserseiles selbst kommt hinzu, dass die Verwendung von Faserseilen auch eine Gewichtsersparnis bei weiteren Komponenten ermöglicht. Beispielsweise kann der Lasthaken leichter ausgeführt werden, da zur Seilspannung eines Faserseils weniger Lasthakengewicht notwendig ist. Zum anderen erlaubt die gute Biegsamkeit von Faserseilen kleinere Biegeradien und damit kleinere Seilscheiben bzw. -rollen am Kran, was zu einer weiteren Gewichtsreduzierung insbesondere im Bereich von Kranauslegern führt, so dass bei großen Kranausladungen eine erhebliche Lastmomentsteigerung erreicht werden kann.

Zusätzlich zu den genannten Gewichtsvorteilen zeichnen sich Faserseiltriebe durch eine größere Lebensdauer, leichtes Hantieren und gute Biegsamkeit sowie die nicht mehr notwendige Seilschmierung aus.

Andererseits gibt es bei hochfesten Faserseilen einige Probleme, die eine einfache Umrüstung von Stahlseil auf Faserseil erschweren. Ein wesentlicher Punkt ist hier die Seilendbefestigung an der Seiltrommel. Bei Stahlseilen erfolgt die Seilendbefestigung üblicherweise mittels Klemmbacken auf der Außenseite der Bordscheibe, wo das Seilende, das durch eine Öffnung in der Bordscheibe nach außen geführt wurde, geklemmt wird, vgl. US 2 846 162 A und DE 895 082 C. Eine solche Stahlseilendbefestigung üblicher Bauform zeigt die Fig. 10, wonach das Stahlseil auf der Bordscheibenaußenseite bogenförmig entlang geführt und mittels mehrere - in der gezeichneten Figur mittels fünf - separaten, voneinander beabstandeten Klemmbacken auf der Bordscheibenaußenseite festgeklemmt wird. Um den Seilzug auf die genannten Klemmbacken zu reduzieren, werden üblicherweise noch auf der Seiltrommel mindestens drei Sicherheitswindungen genutzt, um durch die hier erzielte Umschlingungsreibung den Seilzug im Bereich der Klemmbacken zu reduzieren.

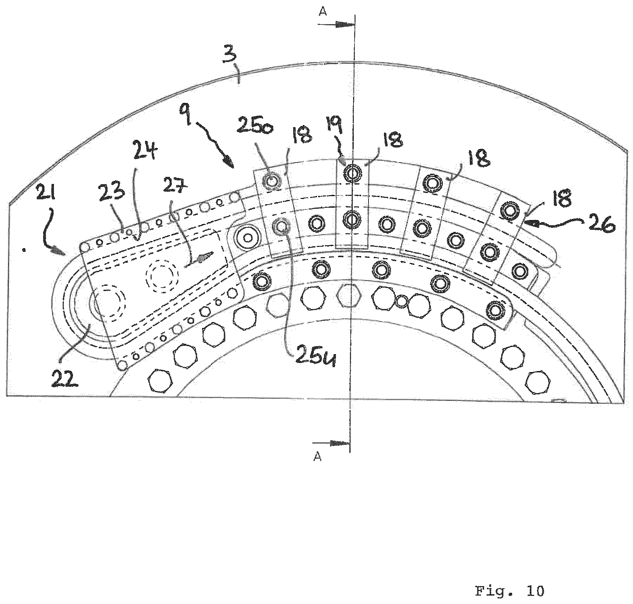

Diese in Fig. 10 gezeigte Art der Seilendbefestigung gibt bei einem Stahlseil genügend Sicherheit gegenüber Lösen des Seilendes. In den häufigsten Fällen werden die notwendigen Sicherheiten gegen Lösen des Seils vom Gesetzgeber oder von Klassifikationsgesellschaften wie beispielsweise dem DNV vorgeschrieben.

Für hochfeste Faserseile jedoch ist die genannte Befestigungsart, wie sie für Stahlseile verwendet wird, nicht ausreichend und problematisch. Ein Grund liegt hierbei darin, dass bei einem hochfesten Faserseil sehr viel geringere Reibwerte gegeben sind. Während der Reibwert zwischen einem Stahlseil und der Stahltrommel ca. 0,1 µ beträgt, liegt der Reibwert beim hochfesten Faserseil nur bei ca. 0,05 µ. Dies bedeutet, dass für die gleiche Zugkraft am Seilende für das hochfeste Faserseil mindestens sieben Sicherheitswindungen erforderlich wären, um die gleiche Rückhaltekraft durch Umschlingungsreibung zu erzielen. Zusätzlich wäre auch noch die Befestigung auf der Bordscheibe wegen des genannten niedrigeren Reibwerts von 0,05 µ zu ändern. Ein Erhöhen der Klemmkraft ist jedoch nicht ohne weiteres möglich, da die Quersteifigkeit des verwendeten Stahlseiles deutlich höher ist, als die eines Faserseilen, so dass im Gegenteil die Klemmkräfte bei einem Faserseil deutlich kritischer und vergleichsweise stärker zu begrenzen sind.

In der Schrift WO 2012/100939 A1 ist aus diesem Grund bereits vorgeschlagen, auf eine Seilklemmung gänzlich zu verzichten, um das hochfeste Faserseil nicht durch Querverformungen zu beschädigen. Das Seilende wird zwar ähnlich wie bei einer bekannten Stahlseilendbefestigung mittels Schraubbacken auf der Bordscheibenaußenseite gehalten, wobei die genannten Schraubbacken jedoch nicht als Klemmbacken wirken, sondern lediglich einen Führungskanal für das Faserseil definieren, so dass dieses ohne Querklemmung unter den Backen hindurchlaufen kann. Die Seilendbefestigung wird bei der WO 2012/100939 A1 durch ein in das Seilende eingespleißtes Seilauge erzielt, das an einem starren Haltepoller an der Bordscheibenaußenseite eingehängt wird.

Hierdurch ist zwar die Problematik der Querquetschung des hochfesten Faserseils entschärft. Anderseits ist ein solches eingespleißtes Seilendauge, das gegebenenfalls durch eine Kausch verstärkt sein kann, hinderlich beim Einziehen des Seils. Um das Seil durch Einscherungsflaschen und Seilrollen fädeln zu können, braucht das Seil zumindest ein glattes, unverspleißtes Ende. Auch das Durchführen durch die Bordscheibe der Seiltrommel, um vom Trommelmantel auf die Bordscheibenaußenseite zu kommen, ist mit einem verspleißten Seilauge kaum möglich bzw. wäre hierfür ein die Bordscheibe übermäßig schwächendes, überdimensioniertes Bordscheibenloch nötig, wenn das Seilende nicht erst nach dem Durchfädeln zu dem genannten Seilauge verspleißt werden soll, was in der Praxis kaum möglich ist.

Der vorliegenden Erfindung liegt daher die Aufgabe zugrunde, einen verbesserten Faserseiltrieb sowie eine verbesserte Seiltrommel hierfür zu schaffen, die Nachteile des Standes der Technik vermeiden und letzteren in vorteilhafter Weise weiterbilden. Insbesondere soll eine verbesserte Seilendbefestigung von hochfesten Faserseilen an der Seiltrommel erzielt werden, die die Besonderheiten von hochfesten Faserseilen wie niedriger Reibbeiwert, begrenzte Querdruckfestigkeit und Biegbarkeit berücksichtigt, ohne das Ein- und Ausfädeln des Seils durch Seilrollen an Seileinscherungen und an der Seiltrommel zu beeinträchtigen.

Erfindungsgemäß wird die genannte Aufgabe durch eine Seiltrommel gemäß Anspruch 1 sowie einen Faserseiltrieb gemäß Anspruch 18 gelöst. Bevorzugte Ausgestaltungen der Erfindung sind Gegenstand der abhängigen Ansprüche.

Es wird also vorgeschlagen, die für die Befestigung des Seilendes zur Verfügung stehende Seilstrecke durch eine hin- und hergehende Seilführung zu verlängern und die Haltewirkung durch Umschlagen des Seils um ein an der Seiltrommel befestigtes Seilumschlagelement deutlich zu erhöhen. Erfindungsgemäß umfasst die Seilendbefestigungsvorrichtung der Seiltrommel zwei nebeneinanderliegende Strangführungskanäle, die zu einem Seilumschlagselement führen, an dem das Seilende um- und zurückschlagbar ist, so dass in den beiden Strangführungskanälen jeweils ein Seilstrang zu liegen kommt, sowie ferner eine den Strangführungskanälen zugeordnete Klemmvorrichtung zum Festklemmen zumindest des Seilstrangs, der um das Seilumschlagelement zurückgeschlagen ist, in dem diesem Seilstrang zugeordneten Strangführungskanal. Durch das u-förmige Umschlagen des Seils um das genannte Seilumschlagselement, das durch die nebeneinanderliegenden Seilführungskanäle zu einem relativ scharfen, seilaugenähnlichen Umschlingen des Seilumschlagelements führt, und das Festklemmen des zurückgeschlagenen Seilendabschnitts können an dem Seilumschlagelement hohe Seilhaltekräfte erzeugt und abgefangen werden, ähnlich wie dies bei einem Seilauge der Fall ist, das an einem Poller eingehängt wird, ohne jedoch tatsächlich ein eingespleißtes Seilauge zu benötigen. Die durch die Klemmung selbst abzufangenden Kräfte werden durch die am Seilumlenkmittel abgefangenen Seilhaltekräfte deutlich reduziert, so dass mit geringeren Klemmkräften ein Auskommen erreicht wird.

In vorteilhafter Weiterbildung der Erfindung kann die genannte Klemmvorrichtung nicht nur zum Festklemmen des zurückgeschlagenen Seilendabschnitts, sondern auch zum Klemmen des zum Seilumschlagelement hinlaufenden Seilabschnitts ausgebildet sein, so dass sowohl der vom Trommelkorpus herkommende Seilstrang als auch der zurückgeschlagene zum Seilende führende Seilstrang in den genannten nebeneinanderliegenden Strangführungskanälen geklemmt werden kann. Hierdurch kann die zu klemmende Seillänge deutlich verlängert werden, ohne dass hierfür signifikant mehr Bauraum benötigt werden würde. Vorteilhafterweise können der zum Seilumschlagelement hinlaufende Seilstrang und der zurückgeschlagene, weglaufende Seilstrang durch gemeinsame Klemmbacken geklemmt werden, die die beiden nebeneinanderliegenden Seilstränge überdecken bzw. umgreifen und gemeinsam klemmen können.

Die die Klemmung bewirkende Seilkontaktkontur der Klemmvorrichtung kann hierbei vorteilhafterweise derart gestaltet sein, dass die nebeneinanderliegenden Seilstränge sowohl gegeneinander geklemmt bzw. gepresst werden als auch gegen eine Wandung der Strangführungskanäle an der Seiltrommel geklemmt bzw. gepresst werden. Durch ein solches Gegeneinanderdrücken der durch das Umschlagen gegenläufigen Seilabschnitte kann die Durchrutschsicherheit nochmals weiter erhöht werden. Da die gegeneinander gedrückten Seilstücke um das genannte Seilumlenkelement umgeschlagen sind, würden die beiden Seilstücke sich bei einer etwaigen Seilbewegung zu einander gegenläufig, d.h. in entgegengesetzte Richtungen bewegen, wofür die Haftreibung der aneinander gedrückten Seilstücke überwunden werden müsste. Diese Haftreibung ist gerade bei Faserseilen hilfreich, da es zwischen den gegeneinander gedrückten Seilstücken zu einem Mikroschluss der Seilfasern kommen kann, der den Durchrutschwiderstand weiter erhöht.

Um die auf das Seilumlenkelement zulaufenden und davon weglaufenden Seilabschnitte nicht nur gegen die Wandung der Seilführungskanäle zu klemmen, sondern auch gegeneinander zu pressen, können die Seilführungskanäle und die sich darüber erstreckende, zumindest eine - vorzugsweise mehrere - Klemmspange ein gemeinsames, vorzugsweise im Querschnitt betrachtet flachgedrücktes, insbesondere zumindest näherungsweise ovales Durchgangsloch für beide Seilstränge definieren. Insbesondere können die nebeneinander liegenden Strangführungskanäle, die zu dem genannten Seilumschlagelement führen, ineinander übergehen bzw. einen gemeinsamen wannenförmigen, im Querschnitt etwa u-förmigen Kanalboden besitzen, der mittig flach gänzlich ohne Trennsteg ausgebildet sein oder gegebenenfalls mittig eine höckerartige, sich an die Seilquerschnitte anschmiegende Bodenerhöhung besitzen kann. Alternativ oder zusätzlich kann die Seilkontaktkontur der den Strangführungskanälen zugeordneten Klemmmittel eine gemeinsame, beide Seilstränge aufnehmende Wannenform besitzen, insbesondere in Form eines im Querschnitt flach gedrückten, zumindest näherungsweise u-förmigen Klemmspangendachs, das ebenfalls mittig gegebenenfalls eine leichte, höckerförmige und sich an die Seilkonturen anschmiegende Konturerhöhung besitzen kann.

Um die nebeneinanderliegenden Seilstränge ausreichend gegeneinander zu drücken, kann eine Breite des genannten Kanalbodens und/oder des genannten Klemmspangendachs, die der Erstreckung zwischen seitlichen Begrenzungsflanken des Kanalbodens und/oder des Klemmspangendachs quer zur Seillängsrichtung entspricht, kleiner, insbesondere geringfügig kleiner, oder gegebenenfalls auch gleich dem zweifachen Seildurchmesser des ungeklemmten, unbelasteten Seils ausgebildet sein. Alternativ oder zusätzlich kann eine Höhe der Seildurchtrittsöffnung, die zwischen dem Kanalboden und dem Klemmspangendach definiert ist, kleiner oder gleich dem einfachen Seildurchmesser des ungeklemmten, unbelasteten Seils ausgebildet sein. Durch das Zusammenspiel von Höhe und Breite der Durchtrittsöffnungen für die beiden Seilstränge kann das Verhältnis von Klemmen gegen die Seiltrommelwandung und Verklemmen der Seilstränge gegeneinander gesteuert werden. Wird beispielsweise die genannte Höhe der Durchgangsöffnung kleiner als der Seildurchmesser gewählt, kommt es zu einem Verpressen der Seilstränge gegen die Seiltrommelwandung und damit Einhergehen zu einer Querschnittsverformung der Seilstränge, die dann bei einer Kanalbreite, die an sich dem zweifachen Seildurchmesser entspricht, zu einem Gegeneinanderpressen der Seilstränge führt. Umgekehrt kann bei einer Kanalbreite, die geringfügig kleiner ist als der doppelte Seildurchmesser, eine Höhe entsprechend dem Seildurchmesser für eine Verklemmung ausreichend sein, da es hier zu einer Querschnittsverformung in Richtung der genannten Kanalbreite kommt, die wiederum zu einer Seilklemmung in Höhenrichtung führt.

Alternativ zu einer solchen gemeinsamen Seilstrangklemmung, bei der die Seilstränge auch gegeneinander geklemmt werden, können die Seilstränge, die zum Seilumlenkmittel hinlaufen und weglaufen, jedoch auch einzeln verklemmt sein, wobei gegebenenfalls auch für jeden Seilstrang separate Klemmbacken vorgesehen sein können. Dies würde es insbesondere erlauben, die Klemmkräfte für jeden Seilstrang gesondert einzustellen. Dies kann insbesondere im Zusammenspiel mit der Ausbildung des Seilumschlagelements vorteilhaft sein, wie noch erläutert wird.

Das genannte Seilumschlagelement, um das das zu befestigende Seilende zurückgeschlagen wird, kann grundsätzlich verschieden ausgebildet sein. Gemäß einer vorteilhaften Ausführung der Erfindung kann das genannte Seilumschlagelement einen Poller oder einen Bolzen oder einen stumpfförmigen Vorsprung umfassen, der an der Seiltrommel starr bzw. unverschieblich befestigt sein kann und einen starren Umlenkpunkt für das umzuschlagende Seilende bildet. Das Seil kann um den genannten Poller bzw. Bolzen geschlungen sein, so dass sich je nach Umschlingungswinkel eine entsprechende Umschlingungsreibung ergibt.

Der genannte Umlenkbolzen ist vorteilhafterweise in einem Bereich angeordnet, an dem die beiden nebeneinander liegenden Seilführungskanäle enden bzw. auf den diese zuführen, so dass der genannte Umschlagbolzen in der Zugrichtung der in den Seilführungskanälen angeordneten Seilstränge liegt und die vom Bolzen bzw. Poller eingeleiteten Seilhaltekräfte die Seilstränge im Wesentlichen nur in Längsrichtung der Seilführungskanäle halten und nicht quer aus den Seilführungskanälen herauszuziehen versuchen.

Der genannte Befestigungspoller kann ein separates Bauteil bilden, das starr an der Seiltrommel, insbesondere deren Bordscheibe, befestigt ist. Alternativ kann der Befestigungspoller auch materialhomogen, integral einstückig an einem Strukturteil der Seiltrommel angeformt sein, insbesondere an der Außenseite der Bordscheibe.

Der genannte Befestigungspoller kann einen zumindest auf der Zugseite abgerundeten Querschnitt besitzen, insbesondere etwa zylindrisch ausgebildet sein, wobei ein Durchmesser des Befestigungspollers zumindest dem Seildurchmesser entsprechen kann, vorzugsweise im Bereich des 1,5-fachen bis 5-fachen des Seildurchmessers liegen kann. Hierdurch kann ein günstiger Kompromiss zwischen kleiner Bauweise und nicht zu starker Biegung des Faserseils erzielt werden.

Der Umschlingungswinkel des Faserseils um den genannten Befestigungspoller kann vorzugsweise im Bereich von etwa 180°, insbesondere 170° bis 200° betragen. Gegebenenfalls kann aber auch eine 1 ½-fache Umschlingung, d.h. ein Umschlingungswinkel von etwa 540° vorgesehen sein, wodurch die Haltekräfte am Befestigungspoller deutlich erhöht werden können. Im Sinne einer gleichmäßigen Verteilung der Haltekräfte auch auf die Klemmbacken kann jedoch eine nur halbe Umschlingung, d.h. etwa 180° Umschlingungswinkel vorteilhaft sein.

Alternativ oder zusätzlich zu einem solchen festen Umlenkpoller kann auch das genannte Seilumschlagelement selbst klemmend ausgebildet sein, so dass das Faserseil auch am Seilumschlagelement selbst geklemmt wird.

Hierzu kann beispielsweise an dem genannten Befestigungspoller eine verstellbare, insbesondere in Pollerlängsrichtung herunterziehbare/-drückbare Klemmscheibe vorgesehen sein, mittels derer das um den Poller geführte Seil gegen die Seiltrommelwandung klemmbar ist.

In vorteilhafter Weiterbildung der Erfindung kann die Klemmung am Seilumschlagelement auch dadurch erreicht werden, dass das Seilumschlagelement nach Art eines Seilklemmschlosses ausgebildet ist. Ein solches Seilklemmschloss kann vorteilhafterweise einen beweglich oder verschieblich gelagerten Seilumlenkblock umfassen, der in einer sich verjüngenden Seilführung verschieblich angeordnet ist, derart, dass der Seilzug den Umlenkblock und damit das Seil in die Klemmkontur hineinzieht. Vorteilhafterweise kann der genannte Umlenkblock und/oder die den Umlenkblock aufnehmende Führungskontur keilförmig und/oder trichterförmig ausgebildet sein und/oder sich in Richtung des vom Umlenkblock ablaufenden Seils verjüngend konturiert sein.

In vorteilhafter Weiterbildung der Erfindung kann der genannte Umlenkblock und/oder die den Umlenkblock einfassende Seilführungskontur eine Verjüngung im Bereich eines Keilwinkels von 2 x 3° bis 2 x 20°, vorzugsweise 2 x 5° bis 2 x 10° besitzen. Hierdurch kann eine hohe Klemmreibung ohne zu hohe Quetschung des Faserseils erzielt werden.

Vorteilhafterweise können der Umschlagblock und die den Umschlagblock umgebenden Seilführungskonturen auf einer Länge aneinander angepasst sein, die mindestens dem 2-fachen, vorzugsweise dem 5-fachen oder mehr des Seildurchmessers entspricht. Durch eine solche relativ große Länge der Klemmkonturpaarung können zu hohe Quetschungen des Faserseils vermieden werden.

In Weiterbildung der Erfindung kann das Faserseil den genannten Umlenkblock, der als Klemmkeil wirkt, mit einem Umschlingungswinkel von näherungsweise 180°, vorzugsweise 180° bis 220° umschlingen, so dass das Faserseil auf gegenüberliegenden Seiten des Umlenkblocks gegen dort vorgesehene Seilführungskonturen geklemmt werden kann und dabei gleichzeitig der Seilzug den Umlenkblock in die trichterförmig zulaufenden Seilführungskonturen hineinzieht.

In vorteilhafter Weiterbildung kann das genannte Seilklemmschloss zumindest einschließlich des genannten Umlenkblocks und der diesen einfassenden Seilführungskonturen eine separate, vormontierte Baugruppe bilden, die nachträglich an der Seiltrommel, insbesondere deren Bordscheibe befestigt werden kann, wobei diese vormontierte Baugruppe vorteilhafterweise auch die zum Seilklemmschloss laufenden Seilführungskanäle und/oder die den Seilführungskanälen zugeordneten Klemmbacken umfassen kann, so dass die gesamte Seilendbefestigungsvorrichtung in Form einer vormontierten Baugruppe auf die Seiltrommel, insbesondere der Bordscheibe montiert bzw. nachgerüstet werden kann. Alternativ wäre es jedoch ebenfalls möglich, die genannten Bauteile des Seilklemmschlosses und/oder die Klemmbacken separat voneinander auszubilden und separat anzumontieren.

Um die Klemmwirkung des genannten Seilklemmschlosses zu unterstützen, kann es vorteilhaft sein, den auf das Seilschloss zuführenden Seilstrang und den vom Seilschloss wegführenden Seilstrang unterschiedlich stark zu klemmen, wobei insbesondere der umgeschlagene Seilabschnitt, der zum Seilende führt, stärker geklemmt sein kann als der vom Trommelkorpus herkommende Seilstrang. Durch eine solchermaßen verschieden starke Klemmung der zu- und weglaufenden Seilstränge wird sichergestellt, dass das Seilklemmschloss seine volle Wirkung entfalten kann und es wird die Seilhaltewirkung des Seilklemmschlosses berücksichtigt im Sinne einer gleichmäßigen Verteilung der Haltekräfte auf die Klemmbacken.

Beispielsweise kann der auf das Seilklemmschloss zulaufende Seilstrang, der vom Trommelkorpus her kommt, überhaupt nicht oder nur ganz leicht geklemmt werden, so dass die diesen Strang überspannenden Klemmbacken im Wesentlichen nur nach Art einer Seilführung wirken. In diesem Fall ist lediglich der zurückgeschlagene Seilabschnitt von entsprechenden Klemmbacken geklemmt und gehalten.

Alternativ können jedoch auch bei der Seilklemmschlossausbildung beide Seilstränge, d.h. der vom Trommelkorpus her kommende, auf das Seilklemmschloss zulaufende Seilstrang und der zurückgeschlagene Seilstrang geklemmt sein, wobei die Klemmvorrichtung vorteilhafterweise derart ausgebildet sein kann, dass die Klemmwirkung am zurückgeschlagenen Seilstrang großer ist als die Klemmwirkung am zum Seilschloss laufenden Seilstrang. Ein solches unterschiedliches Einstellen der Klemmkräfte kann beispielsweise durch variables Einstellen des Drehmoments erzielt werden, mit dem die Klemmbacken anziehende Klemmschrauben festgezogen werden. Alternativ oder zusätzlich können auch Klemmbacken vorgesehen sein, die auf Stoß bzw. Anschlag festgezogen werden und somit immer dieselbe Klemmstellung einnehmen, jedoch eine unterschiedliche Bemessung hinsichtlich des durch die Klemmbacken festgelegten Durchtrittslochs für die Seilstränge besitzen. Insbesondere kann die dem umgeschlagenen Seilstrang zugeordnete Klemmkontur einen kleineren Seildurchtrittsquerschnitt definieren als die Klemmkontur, die dem Seilstrang zugeordnet ist, der vom Trommelkorpus her kommend auf das Seilschloss zuläuft. Beispielsweise kann eine Höhe des Seilkontaktabschnitts der Klemmbacke, die dem auf das Seilschloss zulaufenden Seilstrang zugeordnet ist, größer sein als die Höhe des Klemmbacken-Seilkontaktabschnitts, der dem umgeschlagenen Seilstrang zuordnet ist, so dass die Seilstränge unterschiedlich stark gegen die Seiltrommelwandung gepresst werden.

Die genannte unterschiedlich starke Klemmung der Seilstränge kann insbesondere in Verbindung mit dem genannten Seilschloss von Vorteil sein, grundsätzlich aber auch bei der zuvor erläuterten Ausführung mit einem starren Umlenkpoller Verwendung finden. Die unterschiedlich starke Klemmung kann auch mit der zuvor beschriebenen Ausführung kombiniert werden, bei der die Seilstränge nicht nur gegen eine Seiltrommelwandung gedrückt und geklemmt werden, sondern auch gegeneinander gedrückt werden.

Die Erfindung wird nachfolgend anhand vorteilhafter Ausführungsformen und zugehöriger Zeichnungen näher erläutert. In den Zeichnungen zeigen:
- Fig. 1:: eine perspektivische Darstellung einer Seiltrommel eines Faserseiltriebs nach einer vorteilhaften Ausführung der Erfindung, wobei die Seilbefestigungsvorrichtung auf der Außenseite einer Bordscheibe und das damit befestigte Faserseil dargestellt sind,
- Fig. 2:: eine schematische, perspektivische Seitenansicht der Seiltrommel aus Fig. 1, wobei die Seilbefestigungsvorrichtung ohne Seil dargestellt ist, so dass die Seilführungskanäle zu sehen sind, die in diesem Ausführungsbeispiel ineinander übergehen, um die Seilstränge auch gegeneinander dürcken zu können,
- Fig. 3:: eine schematische, perspektivische Darstellung der Seiltrommel aus den vorhergehenden Figuren, die das Durchfädeln des Faserseils durch die Bordscheibe zeigt,
- Fig. 4:: eine perspektivische, schematische Darstellung der Seiltrommel aus den vorhergehenden Figuren, die das Durchfädeln des Seils durch die Bordscheibe von der Trommelseite her zeigt,
- Fig. 5:: eine schematische, perspektivische Darstellung der Seiltrommel aus den vorhergehenden Figuren, die das Faserseil nach Einführen in die Seilführungskanäle und zurückgeschlagen um den Umlenkpoller beim noch entfernten Klemmbacken zeigt,
- Fig. 6:: eine schematische, perspektivische Darstellung der Seiltrommel aus den vorhergehenden Figuren, die die Seilbefestigungsvorrichtung nach Anbringen einer ersten Klemmbacke zeigt,
- Fig. 7:: eine schematische, perspektivische Darstellung der Seiltrommel aus den vorhergehenden Figuren, die die Seilbefestigungsvorrichtung nach Anbringen von drei Klemmbacken zeigt,
- Fig. 8:: eine frontale Draufsicht auf die Außenseite der Bordscheibe der Seiltrommel und die daran befestigte Seilbefestigungsvorrichtung im zu Ende montierten Zustand ähnlich Fig. 7,
- Fig. 9:: eine frontale Draufsicht auf die Außenseite der Bordscheibe einer Seiltrommel eines Faserseiltriebs, die keine Ausführung der Erfindung zeigt, wobei die Seilbefestigungsvorrichtung anstelle des in den vorhergehenden Figuren gezeigten starren Umlenkpollers ein Seilklemmschloss umfasst, in dem das zurückgeschlagene Faserseil zusätzlich zu den Klemmbacken geklemmt wird,
- Fig. 10:: eine ausschnittsweise, vergrößerte Frontalansicht der Seilbefestigungsvorrichtung und deren Seilklemmschluss aus Fig. 9,
- Fig. 11:: eine Schnittansicht durch eine der Klemmbacken entlang der Linie A-A in Fig. 10, die die unterschiedlichen Konturen der Seilkontaktabschnitte der Klemmbacke zeigt, um unterschiedlich hohe Klemmkräfte für die verschiedenen Seilstränge zu erzielen, und

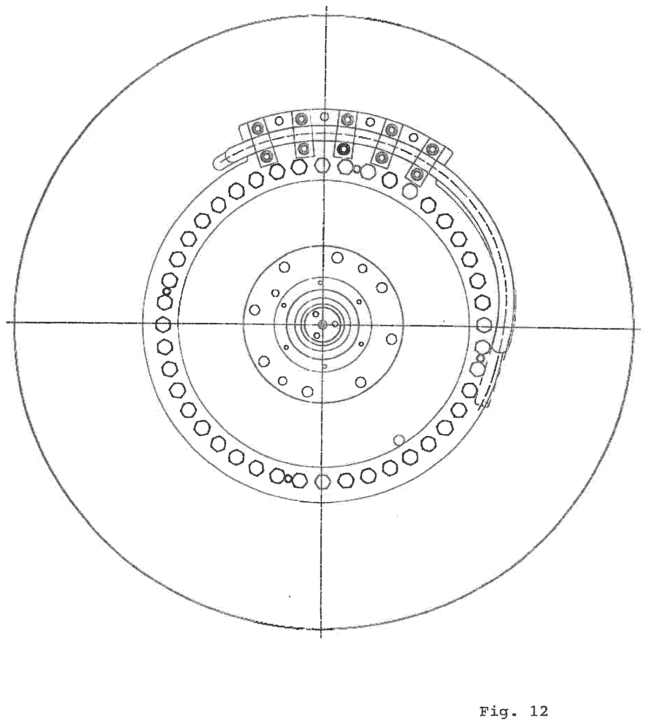

- Fig. 12:: eine frontale Draufsicht auf die Außenseite der Bordscheibe einer Seiltrommel nach dem Stand der Technik, die die herkömmliche Seilbefestigung für Stahlseile zeigt.

Die in den Figuren gezeigten Seiltrommeln 1 umfassen jeweils einen grob gesprochen zylindrischen Trommelmantelkorpus 2, an dessen axialen Enden jeweils eine Bordscheibe 3 angeschlossen ist, die sich grob gesprochen senkrecht zur Trommellängsachse erstrecken und von der Trommelmantelfläche radial nach außen vorspringen und einen deutlich größeren Durchmesser als der Trommelmantel besitzen.

Die gezeigte Seiltrommel 1 kann hierbei insbesondere in Hubwerken eines Krans wie beispielsweise einem Turmdrehkran oder einem mobilen Teleskopkran oder einem Auslegermastverstellwerk oder aber auch in anderen Seilwinden Verwendung finden.

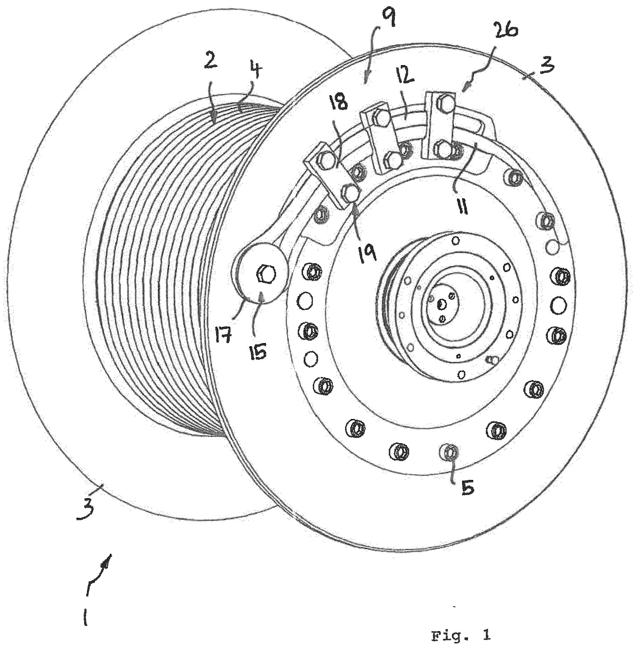

Die genannte Bordscheiben 3 können mit dem Trommelmantelkorpus 2 in verschiedener Art und Weise verbunden sein. Beispielsweise ist eine einstückige Fertigung denkbar, wobei vorteilhafterweise jedoch die Bordscheiben 3 nachträglich an den Trommelmantelkorpus 2 gefügt sein können. Wie beispielsweise Fig. 1 zeigt, können die Bordscheiben 3 stirnseitig auf den Trommelmantelkorpus 2 aufgesetzt und durch Befestigungsmittel in Form von Schraubbolzen 5 befestigt sein.

Der Trommelmantelkorpus 2 kann mit einer Berillung 4 versehen sein, deren Seilrillen 6 sich über den gesamten Trommelmantelkorpus 2 erstrecken können.

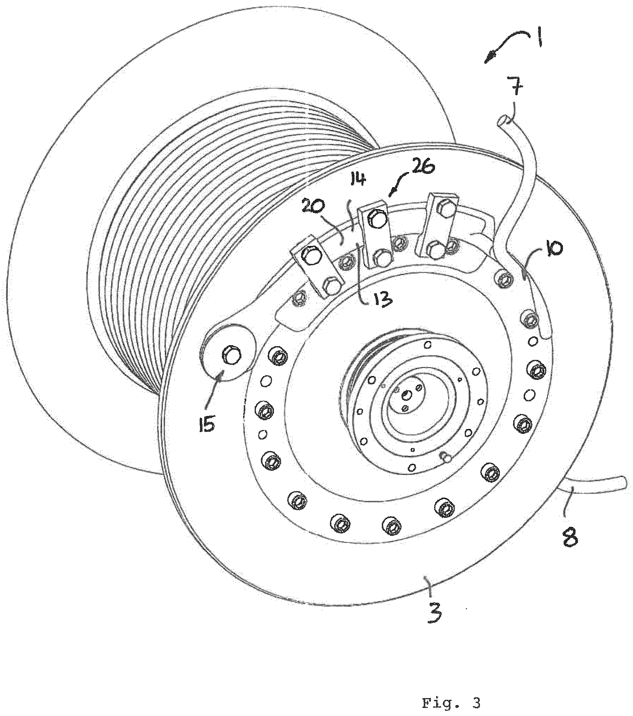

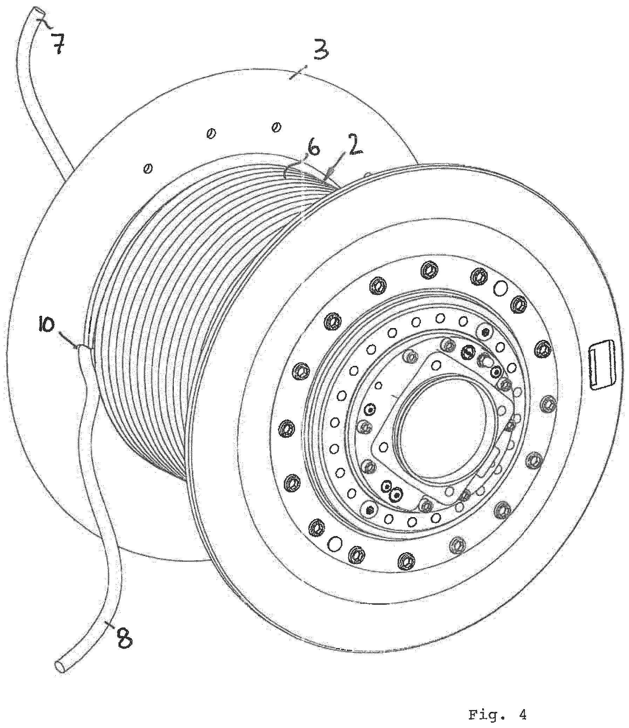

Um das Seilende 7 des auf den Trommelmantelkorpus 2 aufzuwickelnden Seils 8 an der Seiltrommel 1 zu befestigen, kann das Seil 8 mit seinem Seilende 7 durch die Bordscheibe 3 hindurch auf eine Außenseite einer der Bordscheiben 3 geführt und dort mittels einer Seilbefestigungsvorrichtung 9 befestigt sein. Wie die Figuren 3 und 4 zeigen, kann die Bordscheibe 3 in einem Abschnitt angrenzend an den Trommelmantelkorpus 2 eine Seildurchführung 10 in Form einer Ausnehmung in der Bordscheibe 3, insbesondere in Form eines Durchgangslochs aufweisen.

Die Seilbefestigungsvorrichtung 9, die auf der Außenseite der Bordscheibe 3 vorgesehen und befestigt ist, kann eine von der Bordscheibe 3 separate, vormontierte Baugruppe bilden und als Ganzes auf der Bordscheibenaußenseite montiert werden. Alternativ können die noch zu beschreibenden Bestandteile der Seilbefestigungsvorrichtung 9 jedoch auch separat an der Bordscheibe 3 montiert werden.

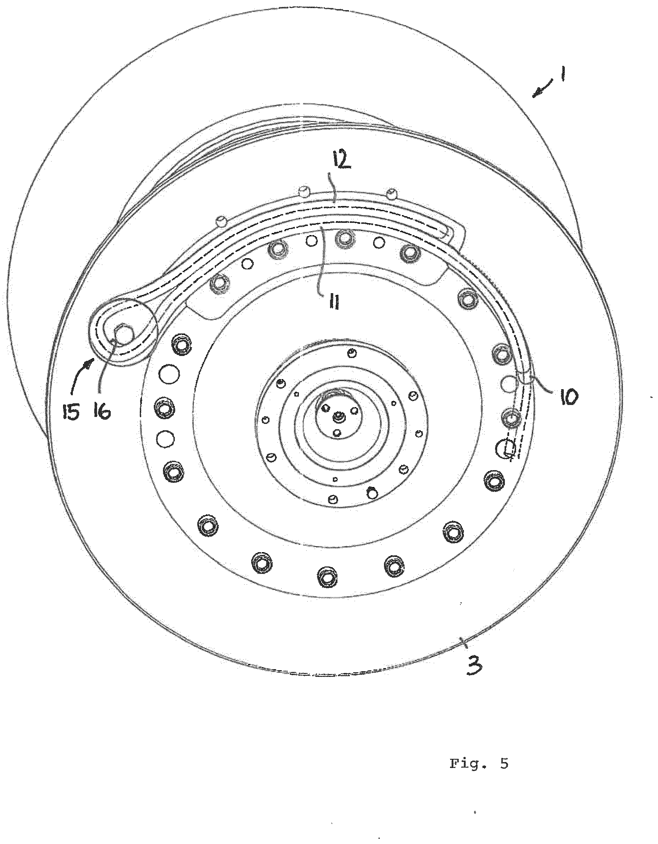

Wie Fig. 5 zeigt, ist die Seilbefestigungsvorrichtung 9 derart ausgebildet, dass das Seil 8 ohne eingespleißtes Seilauge und auch ohne aufgepresstes Seilverdickungsende oder andere Seilveränderungen an der Außenseite der Bordscheibe 3 festgeklemmt werden kann, wobei die Seilbefestigungsvorrichtung 9 ein Zurückschlagen bzw. Umschlagen des Seilendes 7 vorsieht, so dass zwei Seilstränge 11 und 12, die von verschiedenen Abschnitten des Seils 8 gebildet sind, nebeneinander zu liegen kommen, vgl. Fig. 5.

Die Seilbefestigungsvorrichtung 9 umfasst hierzu zwei nebeneinander liegende Seilführungskanäle 13, 14, die sich von der vorgenannten Seildurchführung 10 weg bogenförmig um die Rotationsachse der Seiltrommel 1 herum nebeneinanderliegend erstrecken und zu einem Seilumlenkelement 15 der Seilbefestigungsvorrichtung 9 führen, um welches das Seil 8 umgeschlagen werden kann.

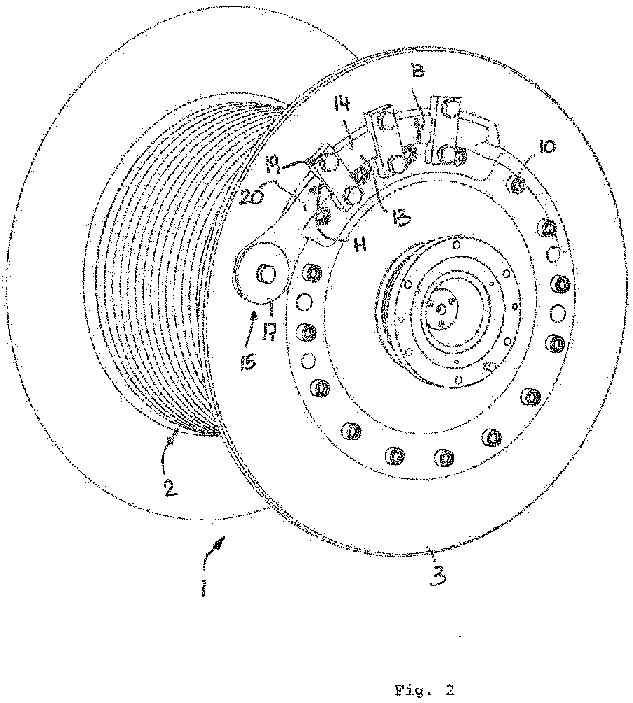

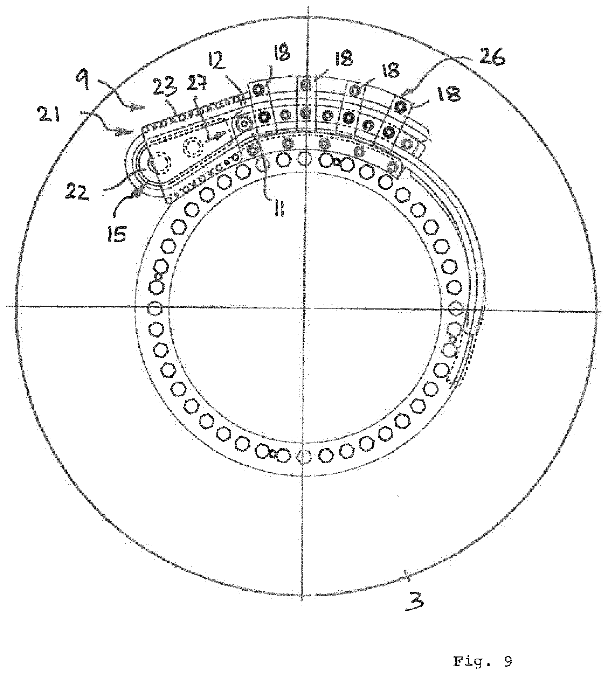

Die genannten Seilführungskanäle 13 und 14 können ineinander übergehen und/oder durch einen gemeinsamen wannenförmigen Sammelkanal gebildet sein, in dem beide Seilstränge 11 und 12 aufgenommen sein können, vgl. Fig. 2. Alternativ können die Seilführungskanäle 13 und 14 auch separat und/oder voneinander beabstandet, jedoch vorzugsweise im Wesentlichen parallel zueinander verlaufend angeordnet sein, vgl. Fig. 9.

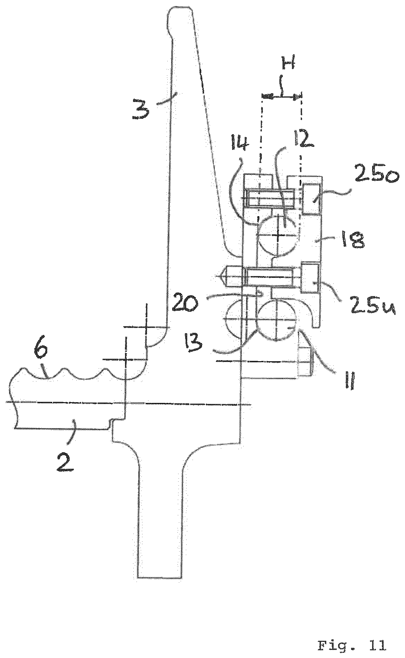

Unabhängig von einer gemeinsamen, ineinander übergehenden Ausbildung oder einer separaten Ausbildung können die genannten Seilführungskanäle 13 und 14 unmittelbar in der Bordscheibe 3 ausgebildet sein oder auch in einer Trägerplatte ausgebildet sein, die auf die Bordscheibe 3 montiert werden und die Trägerplatte der zuvor genannten vormontierten Baugruppe bilden kann. Die genannten Seilführungskanäle 13 und 14 können hierbei in Form einer nutförmigen Senke ausgebildet sein, deren Tiefe vorzugsweise kleiner ist als der Seildurchmesser, beispielsweise auch weniger als der halbe Seildurchmesser - bei unverformten, unbelastetem Seil - sein kann, vgl. Fig. 11, die die Wannentiefe der Seilführungskanäle 13 und 14 bei separaten Seilführungskanälen 13 und 14 zeigt, jedoch entsprechend auch für einen gemeinsamen Sammelkanal gilt.

Wie die Figuren 1 und 2 zeigen, laufen die sich bogenförmig um die Seiltrommelachse erstreckenden Seilführungskanäle 13 und 14 von der Seildurchführung 10 her kommend auf das genannte Seilumlenkelement 15 zu, das ausreichend weit von der Seildurchführung 10 beabstandet starr an der Bordscheibe 3 angebracht sein kann, beispielsweise um einen Winkel von etwa π/4 von der Seildurchführung 10 beabstandet. Je nach benötigter Seilklemmungslänge kann die Beabstandung von der Seildurchführung 10 jedoch auch anders bemessen sein.

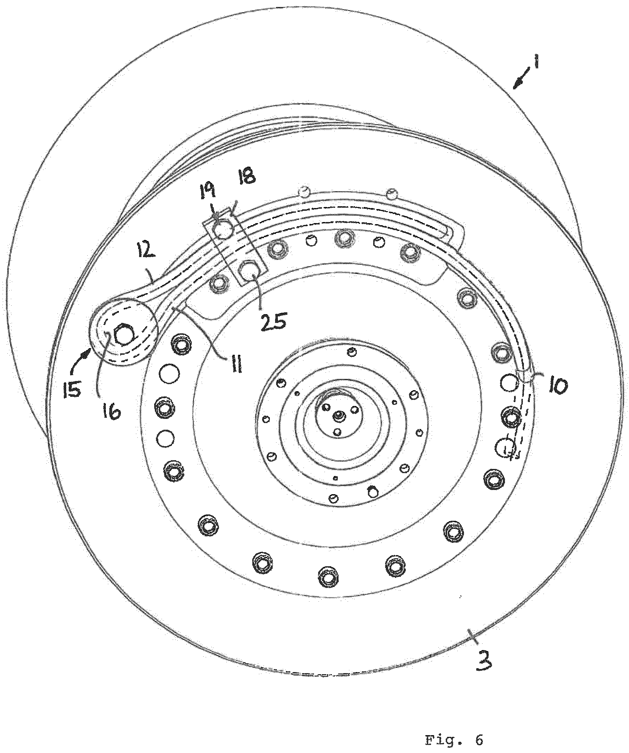

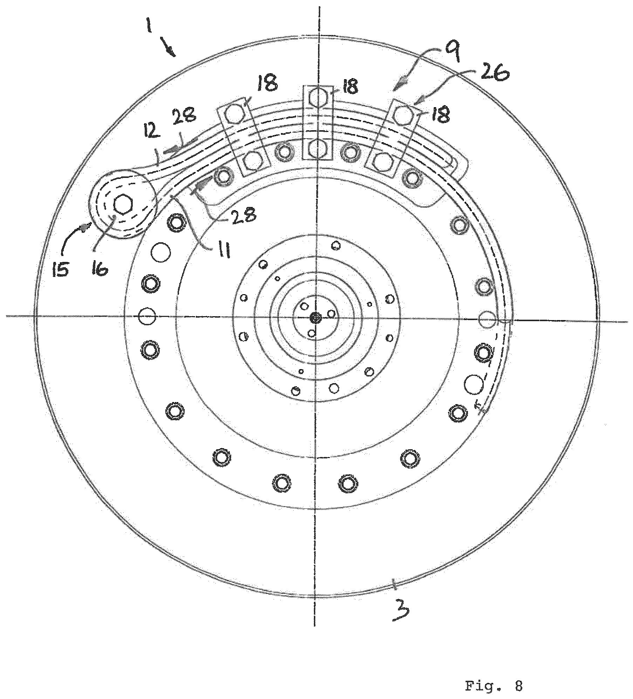

Das genannte Seilumlenkelement 15 kann, wie dies die Figuren 1 bis 8 zeigen, ein starrer Umlenkpoller 16 sein, der einen von der Bordscheibe 3 beabstandeten Kragen 17 aufweisen kann, um ein ungewolltes Herunterrutschen vom Umlenkpoller 16 zu verhindern. Wie Fig. 8 zeigt, kann der Umlenkpoller 16 einen zumindest abgerundeten Querschnitt besitzen, insbesondere etwa zylindrisch ausgebildet sein und dabei einen Durchmesser aufweisen, der im Bereich des 1-fachen bis 5-fachen, insbesondere etwa des 2-fachen des Seildurchmessers betragen kann.

Der an dem starren Umlenkpoller 16 befestigte Kragen 17 kann von der Bordscheibe 3 unterschiedlich weit beabstandet sein und/oder in unterschiedlich weit beabstandeten Positionen befestigt werden, um das Seilumlenkelement 15 an verschiedene Seildurchmesser anpassen zu können, insbesondere auch um eine gewisse Klemmwirkung erzielen zu können. Beispielsweise kann der Kragen 17 mittels einer Schraubverbindung auf den Umlenkpoller 16 gezogen werden, um das zwischen Kragen 17 und Bordscheibe 3 liegende Seil 8 gegebenenfalls zusätzlich zu den Klemmbacken 18 klemmen zu können.

Um das umgeschlagene Seil 8 fixieren zu können, besitzt die Seilbefestigungsvorrichtung 9 zumindest eine Klemmbacke 18, vorzugsweise jedoch mehre solcher Klemmbacken 18, die entlang des Verlaufs der Seilführungskanäle 13 und 14 voneinander beabstandet angebracht sein können.

Die genannten Klemmbacken 18 können durch Spannmittel 19, beispielsweise in Form von Schraubbolzen 25, auf die Bordscheibe 3 zu gespannt werden, um die unter den Klemmbacken 18 hindurchlaufenden Seilstränge 11 und 12 klemmen zu können.

Wie Figur 1 zeigt, können die Klemmbacken 18 sich dabei vorteilhafterweise über beide Seilstränge 11 und 12 erstrecken und derart ausgebildet sein, dass die Seilstränge 11 und 12 nicht nur gegen die Bordscheibe 3 bzw. eine auf der Bordscheibe 3 aufgebrachte Trägerplatte der Seilbefestigungsvorrichtung 9, sondern auch gegeneinander gedrückt werden können. Dieses Gegeneinanderdrücken der beiden Seilstränge 11 und 12 kann auch durch entsprechende Ausbildung der Seilführungskanäle 13 und 14 in der den Klemmbacken 18 gegenüberliegenden Wandung unterstützt und/oder erreicht werden. Insbesondere können die Seilführungskanäle 13 und 14 begrenzungsfrei ineinander übergehen und einen gemeinsamen wannenförmigen, im Querschnitt etwa u-förmigen Kanalboden besitzen, auf dem beide Seilstränge 11 und 12 nebeneinanderliegend aufgenommen werden können. An diesen wannenförmigen Kanalboden 20 angepasst können die Klemmbacken 18 vorteilhafterweise ebenfalls ein gemeinsames, wannenförmiges im Querschnitt etwa u-förmiges Klemmbackendach besitzen, das sich über dem genannten Kanalboden 20 erstreckt, so dass die die Seilklemmung bewirkenden Seilkontaktkonturen insgesamt betrachtet flachgedrückte, insbesondere im Querschnitt etwa ovale Seildurchgangslöcher definieren, in denen die beiden nebeneinanderliegenden Seilstränge 11 und 12 einerseits zwischen den Klemmbacken 18 und Wandungen der Seilführungskanäle 13 und 14 geklemmt, andererseits auch gegen einander gedrückt werden können.

Hierzu kann die Breite B des vorgenannten wannenförmigen Kanalbodens 20 und/oder des wannenförmigen Klemmbackendachs zwischen seitlichen Begrenzungsflanken des Kanalbodens und/oder des Klemmspannendachs kleiner oder gleich dem zweifachen Seildurchmesser im ungeklemmten, unbelasteten Seilzustand sein, wobei eine Höhe H der genannten Seildurchführungskanäle zwischen Kanalboden 20 und Klemmbacken 18 kleiner oder gleich dem Seildurchmesser im ungeklemmten, unbelasteten Seilzustand sein kann.

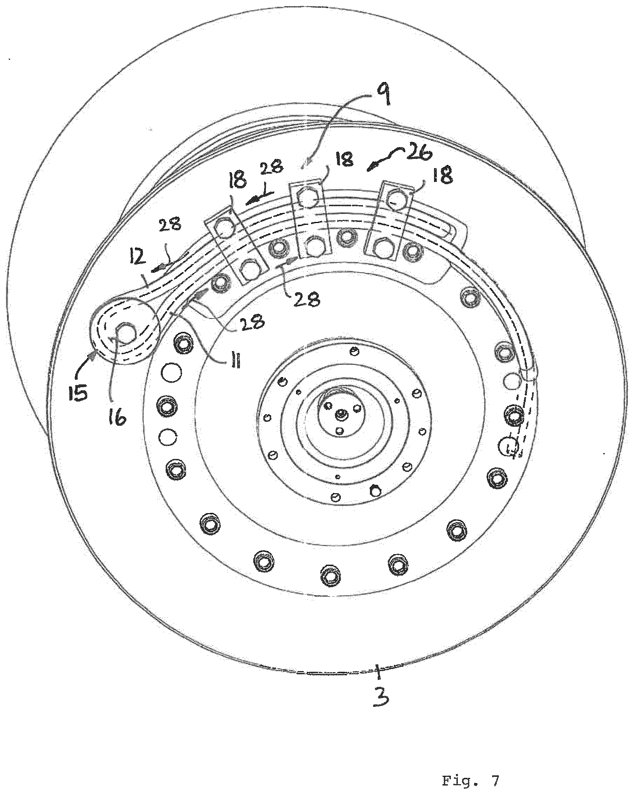

Durch das Gegeneinanderklemmen der beiden Seilstränge 11 und 12 kann eine zusätzliche Durchrutschsicherheit erzielt werden, da das Seil 8 um den Umlenkpoller 16 umgeschlagen ist und sich die Seilstränge 11 und 12 bei einem etwaigen Bewegen des Seils 8 gegenläufig zueinander bewegen müssten, wie dies die Pfeile 28 zeigen, vgl. Fig. 7 und 8.

Die Anzahl der Klemmbacken 18 kann variiert werden. Insbesondere können die Seilstränge 11 und 12 je nach Größe des auftretenden Seilzuges und der Anzahl der Sicherheitswindungen auf dem Trommelmantelkorpus 2 mit einer variablen Anzahl von Klemmbacken 18 an der Bordscheibe 3 geklemmt werden, so dass diese eine kompakte Einheit bilden, um die auftretende Zugkraft mit ausreichender Sicherheit durch den Umlenkpoller 16 und die Klemmbacken 18 aufzunehmen.

Anstelle des genannten, starr an der Bordscheibe 3 angeordneten Umlenkpollers 16 kann auch ein Seilklemmschloss 21 vorgesehen sein, das sich durch den

Seilzug selbst verklemmt und hierbei das Seil 8 festklemmt. Wie die Figuren 9 und 10 zeigen, kann ein solches Seilklemmschloss 21 ebenfalls am Ende der beiden nebeneinander liegenden Seilführungskanäle 13 und 14 angeordnet sein, so dass das von der Seildurchführung 10 her kommende Seil, das in dem Seilführungskanal 13 auf das Seilklemmschloss 21 zuläuft, um das genannte Seilklemmschloss 21 umgeschlagen werden kann, so dass der zurückgeschlagene Seilstrang 12 in dem anderen Seilführungskanal 14 verläuft. Soweit nicht eigens abweichend erläutert, kann die Seiltrommel 1 und auch die Seilbefestigungsvorrichtung 9 im Übrigen ausgebildet sein wie in Bezug auf die vorhergehenden Figuren erläutert, wobei für entsprechend Bauteile auch entsprechend Bezugsziffern verwendet sind.

Das genannte Seilklemmschloss 21 umfasst einen beweglich gelagerten, insbesondere in Seilzugrichtung verschieblichen Umlenkblock 22, um den das Seil 8 in der zuvor genannten Weise umgeschlagen wird. Der genannte Umlenkblock 22 ist dabei verschieblich in einem an der Bordscheibe 3 feststehend angeordneten Klemmblock 23 angeordnet, der den Umlenkblock 22 umgebende Seilklemmkonturen 24 aufweist. Die genannten Seilklemmkonturen 24 können beispielsweise von flanschartigen Kontaktstegen gebildet sein, die von der Bordscheibe 3 stirnseitig vorspringen und/oder den genannten Umlenkblock 22 seitlich umgeben. Insbesondere kann zwischen dem Umlenkblock 22 und den genannten Seilklemmkonturen 24 des Klemmblocks 23 ein spaltförmiger Seildurchgang gebildet sein, durch den hindurch das zurückgeschlagene Seil 8 verläuft.

Die genannten Seilklemmkonturen 24 sowie die daran angepassten Außenkonturen des Umlenkblocks 22 können sich vorteilhafterweise in Seilzugrichtung 27 - also zu den Klemmbacken 18 hin - verjüngen, insbesondere keilförmig und/oder trichterförmig ausgebildet sein.

Insbesondere sind die Seilklemmkonturen 24 und der Umlenkblock 23 derart ausgebildet und aufeinander abgestimmt, dass sich der spaltförmige Seildurchgang zwischen Umlenkblock 22 und Klemmblock 23 verschmälert, wenn der Umlenkblock 22 unter dem Seilzug des Seils 8 in den Klemmblock 23 hinein gezogen und/oder auf den Klemmblock 23 zu gezogen wird. Um eine ausreichende Seilklemmkraft zu erreichen, ohne übermäßige Seilquetschkräfte zu haben, können sich die Seilklemmkonturen 24 des Klemmblocks 23 und/oder die Klemmkonturen des Umlenkblocks 22 unter einem Keilwinkel von etwa 2 x 5° bis 2 x 15° verjüngen. Vorteilhafterweise können die zusammenwirkenden Seilklemmkonturen 24 und die Klemmkonturen des Umlenkblocks 22 eine Seilklemmlänge besitzen, entlang derer der Umlenkblock 22 und der Klemmblock 23 das umgeschlagene Seil 8 klemmen, welche Seilklemmlänge mindestens dem doppelten Durchmesser des unverformten Seils 8 entspricht, vorzugsweise auch mehr als dem dreifachen Seildurchmesser, insbesondere auch mehr als dem fünffachen Seildurchmesser entsprechen kann.

Die von den Klemmbacken 18 abgewandte Stirnseite des Umlenkblocks 22 ist vorteilhafterweise abgerundet, um das Seil 8 bogenförmig um den Umlenkblock 22 zu führen.

Um eine einfache Handhabung mit einer verlässlichen Seilsicherung zu kombinieren, kann der genannte Klemmblock 23 eine Aufnahmetasche besitzen, in der der Umlenkblock 22 zumindest teilweise aufgenommen ist und in der sich der genannte Umlenkblock 22 axial verschieben lässt. Beispielsweise kann der Umlenkblock 22 mittels einer Langlochführung unverlierbar, jedoch in Seilzugrichtung längsverschieblich in der genannten Aufnahmetasche des Klemmblocks 22 angeordnet sein.

Um die Funktion des Seilklemmschlosses 21 zu verstärken, können die Klemmbacken 18 derart eingestellt und/oder ausgebildet sein, dass der auf das Seilklemmschloss 21 von der Seildurchführung 10 her zu laufende Seilstrang 11 weniger stark geklemmt wird als der zurückgeschlagene Seilstrang 12. Hierdurch erfolgt bei auftretender Seilbewegung im Seilzuglauf ein automatisches Nachspannen des Seilklemmschlosses 21 und hierdurch eine höhere Klemmwirkung des Seilklemmschlosses 21.

Die Einstellbarkeit einer geringeren Seilklemmwirkung für den zulaufenden Seilstrang 11 kann beispielsweise dadurch realisiert sein, dass die Klemmbacken 18 im Bereich des genannten Seilstranges 11 mit einer geringere Vorspannkraft vorgespannt werden, beispielsweise durch Anziehen der zugeordneten Schraubbolzen 25 - in Fig. 10 der unteren Schraubbolzen 25u - mit einem geringeren Anzugsmoment als dies beim Anziehen der Schraubbolzen 25o, die dem anderen Seilstrang 12 zugeordnet sind, der Fall ist. Hierbei kann mit separaten Klemmbacken für jeden der genannten Seilstränge 11 und 12 gearbeitet werden, alternativ können aber auch weiterhin Klemmbacken 18 Verwendung finden, die sich über beide Seilstränge 11 und 12 erstrecken.

Alternativ oder zusätzlich zum Einstellen unterschiedlicher Vorspannkräfte können die Klemmbacken 18 aber auch für die beiden Seilstränge 11 und 12 unterschiedlich konturiert sein, um in den genannten Seilsträngen 11 und 12 unterschiedliche Klemmwirkungen zu haben. Insbesondere können die Klemmbacken 18 auf Block angezogen werden, so dass sie nur durch unterschiedliche Konturierung der den verschiedenen Seilsträngen 11 und 12 zugeordneten Backenabschnitte die genannten unterschiedlichen Klemmwirkungen haben. Dies zeigt beispielhaft die Fig. 11, wonach die dem zulaufenden Seilstrang 11 zugeordnete Konturausnehmung der Klemmbacken 18 im Querschnitt betrachtet größer ist als die dem anderen Seilstrang 12 zugeordnete Klemmkonturausnehmung. Insbesondere kann die Klemmvorrichtung 26 auch derart beschaffen sein, dass nur der zurückgeschlagene Seilstrang 12 geklemmt wird, während die Klemmbacken 18 im Bereich des Seilstranges 11 lediglich als Seilführung fungieren, ohne den Seilstrang 11 tatsächlich zu klemmen.

Alternativ oder zusätzlich zu der beschriebenen und in Fig. 11 gezeigten unterschiedlichen Ausbildung der Klemmbackenabschnitte für die verschiedenen Seilstränge 11 und 12 können auch die Seilführungskanäle 13 und 14, mit denen die Klemmbacken 18 zusammenwirken, unterschiedlich ausgebildet sein, insbesondere derart, dass der Seilführungskanal 13, der den von der Seildurchführung 10 her auf das Seilklemmschloss 21 zu laufenden Seilstrang 11 aufnimmt, im Querschnitt betrachtet größer und/oder tiefer und/oder breiter ausgebildet ist als der den umgeschlagenen Seilstrang 12 aufnehmende Seilführungskanal 14. Bei einer solchen unterschiedlichen Ausbildung der Seilführungskanäle 13 und 14 können symmetrische, auf beiden Abschnitten gleich gestaltete Klemmbacken 18 Verwendung finden, so dass sich eine Fehlmontage mit verkehrter Ausrichtung der Klemmbacken 18 einfach verhindern lässt.

Durch die unterschiedlichen Seilklemmkräfte an den verschiedenen Seilsträngen 11 und 12 wird das automatische Nachspannen des Seils 8 noch verstärkt, weil die gesamte Seilzugkraft den keilförmigen Umlenkblock 22 in die Fuge des Klemmblocks 23 presst. Gleichzeitig wird die Gefahr des fehlerhaften Anziehens der Spannmittel der Klemmbacken 18 verhindert, wenn die Klemmbacken 18 auf Block angezogen bzw. alle mit der gleichen Vorspannkraft befestigt werden. Eine Unterscheidung des Bedienpersonals zwischen oben liegenden und unten liegenden Klemmschrauben erübrigt sich.

## Patentansprüche

1. Seiltrommel für einen Faserseiltrieb, mit einem Trommelmantelkorpus (2) zum Aufwickeln des Faserseils (8), den Trommelmantelkorpus (2) einfassende Bordscheiben (3) sowie einer Seilendbefestigungsvorrichtung (9) zum Befestigen eines Seilendes (7) an der Seiltrommel, die zwei nebeneinander liegende und gegebenenfalls ineinander übergehende Strangführungskanäle (13, 14) aufweist, die zu einem Seilumschlagelement (15) führen, an dem das Seilende (7) um- und zurückschlagbar ist, so dass in den Seilführungskanälen (13, 14) jeweils ein Seilstrang (11, 12) zu liegen kommt, sowie ferner eine den Strangführungskanälen (13, 14) zugeordnete Klemmvorrichtung (26) zum Festklemmen zumindest des zurückgeschlagenen Seilstrangs (12) in dem diesem zugeordneten Strangführungskanal (14), aufweist, **dadurch gekennzeichnet, dass** die Klemmvorrichtung (26) und/oder die Strangführungskanäle (13, 14) derart gestaltete Seilkontaktkonturen besitzen, dass die Seilstränge (11, 12) gegeneinander und gegen eine Wandung der Strangführungskanäle (13, 14) gepresst werden.

2. Seiltrommel nach dem vorhergehenden Anspruch, wobei die Strangführungskanäle (13, 14) ineinander übergehen und einen gemeinsamen wannenförmigen, im Querschnitt etwa U-förmigen Kanalboden (20) besitzen, und die Seilkontaktkonturen der Klemmvorrichtung (26) ein gemeinsames wannenförmiges, im Querschnitt etwa U-förmiges Klemmbackendach besitzen, wobei eine Breite (B) des Kanalbodens (20) und/oder des Klemmbackendachs zwischen seitlichen Begrenzungsflanken des Kanalbodens (20) und/oder des Klemmbackendachs kleiner dem zweifachen Seildurchmesser des unbelasteten, unverformten Seils (8) ist.

3. Seiltrommel nach Anspruch 1, wobei die Strangführungskanäle (13, 14) ineinander übergehen und einen gemeinsamen wannenförmigen, im Querschnitt etwa U-förmigen Kanalboden (20) besitzen, und die Seilkontaktkonturen der Klemmvorrichtung (26) ein gemeinsames wannenförmiges, im Querschnitt etwa U-förmiges Klemmbackendach besitzen, wobei eine Breite (B) des Kanalbodens (20) und/oder des Klemmbackendachs zwischen seitlichen Begrenzungsflanken des Kanalbodens (20) und/oder des Klemmbackendachs gleich dem zweifachen Seildurchmesser des unbelasteten, unverformten Seils (8) ist, wobei eine Höhe (H) des Seilführungskanals zwischen dem Kanalboden (20) und dem Klemmbackendach kleiner als der Seildurchmesser des unverformten, unbelasteten Seils (8) ist, sodass beim Verpressen der Seilstränge (11, 12) auf den Kanalboden (20) durch das Klemmbackendach eine Querschnittsverformung der Seilstränge (11, 12) eintritt, die bei der genannten Kanalboden- und/oder Klemmbackendach-Breite (B) gleich dem zweifachen Seildurchmesser zu einem Gegeneinanderpressen der Seilstränge (11, 12) führt.

4. Seiltrommel nach einem der vorhergehenden Ansprüche, wobei das Seilumlenkelement (15) in Form eines starren, an der Seiltrommel (1) ortsfest angeordneten Umlenkpollers (16) ausgebildet ist, wobei das Seilende (7) um den Umlenkpoller (16) mit einem Umschlingungswinkel herumgeschlungen ist, gemäß dem sich eine Umschlingungsreibung ergibt.

5. Seiltrommel nach dem vorhergehenden Anspruch, wobei dem Umlenkpoller (16) ein Kragen (17) zugeordnet ist, der das um den Umlenkpoller (16) umgeschlagene Seil (8) überdeckt, wobei der genannte Kragen (17) vorteilhafterweise in Längsrichtung des Umlenkpollers (16) verstellbar, insbesondere vorspannbar zum Klemmen des um den Umlenkpoller (16) umgeschlagenen Seils (8) ausgebildet ist.

6. Seiltrommel nach einem der vorhergehenden Ansprüche, wobei das Seilumlenkelement (15) ein unter Seilzug selbstklemmendes Seilklemmschloss (21) aufweist, das einen in Seilzugrichtung (27) ortsfesten Klemmblock (23) sowie einen in Seilzugrichtung (27) beweglich gelagerten Umlenkblock (22), der unter Seilzug gegen den Klemmblock (23) fahrbar ist, besitzt.

7. Seiltrommel nach dem vorhergehenden Anspruch, wobei der Klemmblock (23) eine Aufnahmetasche besitzt, in der der Umlenkblock (22) zumindest abschnittsweise aufgenommen und verschieblich angeordnet ist.

8. Seiltrommel nach einem der beiden vorhergehenden Ansprüche, wobei der Umlenkblock (22) auf gegenüberliegenden Seiten angeordnete Seilkontaktflächen besitzt und der Klemmblock (23) den Umlenkblock (22) umgebende Seilklemmkonturen (24) aufweist, die den vorgenannten Seilkontaktflächen des Umlenkblocks (22) gegenüberliegend angeordnet sind, so dass zwischen dem Umlenkblock (22) und dem Klemmblock (23) ein spaltförmiger Seildurchgang für das um den Umlenkblock (22) umgeschlagene Seil vorgesehen ist.

9. Seiltrommel nach dem vorhergehenden Anspruch, wobei sich die Seilklemmkonturen (24) des Klemmblocks (23) und/oder die Seilkontaktflächen des Umlenkblocks (22) in Seilzugrichtung (27) verjüngen, insbesondere keil- und/oder trichterförmig verjüngen, wobei die Seilklemmkonturen (24) des Klemmblocks (23) und/oder die Seilkontaktflächen des Umlenkblocks (22) einen Keilwinkel im Bereich von 2 x 3° bis 2 x 20°, vorzugsweise 2 x 5° bis 2 x 15°, besitzen.

10. Seiltrommel nach einem der vorhergehendenen Ansprüche, wobei die Klemmvorrichtung (26) den Seilsträngen (11, 12) zugeordnete Klemmbacken (18) aufweist, die den Seilsträngen (11, 12) separat zugeordnete Vorspannmittel (25u, 25o), die voneinander unabhängig stark vorspannbar sind, aufweisen, so dass durch unterschiedlich starke Vorspannung der den verschiedenen Seilsträngen (11, 12) zugeordneten Vorspannmittel (25o, 25u) unterschiedliche Klemmkräfte an den verschiedenen Seilsträngen (11, 12) einstellbar sind.

11. Seiltrommel nach einem der vorhergehenden Ansprüche, wobei die Seilendbefestigungsvorrichtung (9) auf einer Außenseite einer der Bordscheiben (3) angeordnet ist.

12. Seiltrommel nach einem der vorhergehenden Ansprüche, wobei die Seilendbefestigungsvorrichtung (9) einschließlich der Klemmvorrichtung (26) und des Seilumlenkelements (15) eine vormontierte Baugruppe bildet, die als Einheit auf einer der Bordscheiben (3) montierbar ist.

13. Faserseiltrieb mit einer Seiltrommel (1), die gemäß einem der vorhergehenden Ansprüche ausgebildet ist, sowie einem Faserseil (8) umfassend Kunststofffasern.

## Claims

1. Cable drum for a fiber rope mechanism, comprising a drum jacket body (2) intended for winding up the fiber rope (8), flanges (3) delimiting the drum jacket body (2), as well as a rope end fastening device (9) intended to fasten a rope end (7) to the cable drum, the rope end fastening device (9) comprising two strand guiding channels (13, 14) arranged next to one another and optionally merging into one another, which lead to a rope deflection element (15), at which the rope end (7) can be deflected and turned back, such that a respective rope strand (11, 12) is positioned in the strand guiding channels (13, 14), and furthermore a clamping device (26) associated with the strand guiding channels (13, 14), intended to clamp at least the turned-back rope strand (12) in the strand guiding channel (14) associated therewith, **characterized in that** the clamping device (26) and/or the strand guiding channels (13, 14) have rope contact contours configured in such a manner that the rope strands (11, 12) can be pressed against one another and against a wall of the strand guiding channels (13, 14).

2. Cable drum according to the preceding claim, in which the strand guiding channels (13, 14) merge into one another and have a common tub-shaped channel base (20) with an approximately U-shaped cross-section, and/or the rope contact contours of the clamping device (26) have a common tub-shaped clamping jaw top with an approximately U-shaped cross-section, a width (B) of the channel base (20) and/or of the clamping jaw top between lateral boundary flanks of the channel base (20) and/or of the clamping jaw top being smaller than twice the rope diameter of the unloaded, non-deformed rope (8).

3. Cable drum according to claim 1, in which the strand guiding channels (13, 14) merge into one another and have a common tub-shaped channel base (20) with an approximately U-shaped cross-section, and the rope contact contours of the clamping device (26) have a common tub-shaped clamping jaw top with an approximately U-shaped cross-section, a width (B) of the channel base (20) and/or of the clamping jaw top between lateral boundary flanks of the channel base (20) and/or of the clamping jaw top being equal to twice the rope diameter of the unloaded, non-deformed rope (8), a height (H) of the rope guiding channel between the channel base (20) and the clamping jaw top being smaller than the rope diameter of the unloaded, non-deformed rope (8), such that, upon compression of the rope strands (11, 12) onto the channel base (20) by the clamping jaw top, a cross-sectional deformation of the rope strands (11, 12) occurs, which results in the rope strands (11, 12) being pressed against one another when said width (B) of the channel base and of the clamping jaw top is equal to twice the rope diameter.

4. Cable drum according to one of the preceding claims, in which the rope deflection element (15) is designed in the form of a rigid deflection bollard (16) fixedly arranged on the cable drum (1), around which the rope end (7) is wound at a wrapping angle from which a wrap friction results.

5. Cable drum according to the preceding claim, in which a collar (17) covering the rope (8) deflected around the deflection bollard (16) is associated with the deflection bollard (16), said collar (17) advantageously being displaceable in the longitudinal direction of the deflection bollard (16), in particular being suitable for being preloaded in order to clamp the rope (8) deflected around the deflection bollard (16).

6. Cable drum according to one of the preceding claims, in which the rope deflection element (15) comprises a rope clamping lock (21) that clamps automatically under rope pull, said rope clamping lock having a clamping block (23) fixed in the rope pull direction (27) as well as a deflection block (22) mounted movably in the rope pull direction (27), which can be displaced against the clamping block (23) under rope pull.

7. Cable drum according to the preceding claim, in which the clamping block (23) has a receiving pocket in which the deflection block (22) is arranged in a sliding manner and received at least in part.

8. Cable drum according to one of the two preceding claims, in which the deflection block (22) has rope contact surfaces arranged on opposite sides and the clamping block (23) comprises rope clamping contours (24) surrounding the deflection block (22), which are arranged opposite said rope contact surfaces of the deflection block (22), such that a slit-shaped rope passage is provided between the deflection block (22) and the clamping block (23) for the rope deflected around the deflection block (22).

9. Cable drum according to the preceding claim, in which the rope clamping contours (24) of the clamping block (23) and/or the rope contact surfaces of the deflection block (22) taper, in particular in a wedge-shaped and/or funnelshaped manner, in the rope pull direction (27), wherein the rope clamping contours (24) of the clamping block (23) and/or the rope contact surfaces of the deflection block (22) have a wedge angle in the range from 2 × 3° to 2 × 20°, preferably from 2 × 5° to 2 × 15°.

10. Cable drum according to one of the preceding claims, in which the clamping device (26) comprises clamping jaws (18) associated with the rope strands (11, 12), which have preload means (25u, 25o) separately associated with the rope strands (11, 12), which can be preloaded independently of one another, such that, by preloading the preload means (25o, 25u) associated with the different rope strands (11, 12) with different forces, different clamping forces can be set on the different rope strands (11, 12).

11. Cable drum according to one of the preceding claims, in which the rope end fastening device (9) is arranged on an outer side of one of the flanges (3).

12. Cable drum according to one of the preceding claims, in which the rope end fastening device (9), including the clamping device (26) and the rope deflection element (15), forms a pre-assembled unit which can be mounted as a unit on one of the flanges (3).

13. Fiber rope mechanism comprising a cable drum (1) designed according to one of the preceding claims, as well as a fiber rope (8) comprising plastic fibers.

## Revendications

1. Tambour à câble pour un mécanisme à câble en fibres, comprenant un corps d'enveloppe de tambour (2) destiné à enrouler le câble en fibres (8), des flasques (3) bordant le corps d'enveloppe de tambour (2) ainsi qu'un dispositif de fixation d'extrémité de câble (9) destiné à fixer une extrémité de câble (7) sur le tambour à câble, le dispositif de fixation d'extrémité de câble (9) comportant deux canaux de guidage de brin (13, 14) placés l'un à côté de l'autre et se fondant l'un dans l'autre éventuellement, qui conduisent à un élément de renvoi de câble (15), au niveau duquel l'extrémité de câble (7) peut être renvoyée et retournée, de telle sorte qu'un brin de câble (11, 12) vient respectivement se placer dans les canaux de guidage de câble (13, 14), ainsi que, en outre, un dispositif de serrage (26) associé aux canaux de guidage de brin (13, 14), destiné à coincer au moins le brin de câble (12) retourné dans le canal de guidage de brin (14) associé à celui-ci, **caractérisé en ce que** le dispositif de serrage (26) et/ou les canaux de guidage de brin (13, 14) possèdent des contours de contact de câble configurés de telle manière que les brins de câble (11, 12) peuvent être pressés l'un contre l'autre et contre une paroi des canaux de guidage de brin (13, 14).

2. Tambour à câble selon la revendication précédente, dans lequel les canaux de guidage de brin (13, 14) se fondent l'un dans l'autre et possèdent un fond de canal (20) commun en forme de cuvette, à la section transversale approximativement en forme de U, et/ou les contours de contact de câble du dispositif de serrage (26) possèdent un plafond de mâchoire de serrage commun en forme de cuvette, à la section transversale approximativement en forme de U, une largeur (B) du fond de canal (20) et/ou du plafond de mâchoire de serrage entre des flancs latéraux de limite du fond de canal (20) et/ou du plafond de mâchoire de serrage étant inférieure au double du diamètre de câble du câble (8) non déformé ni soumis à une charge.

3. Tambour à câble selon la revendication 1, dans lequel les canaux de guidage de brin (13, 14) se fondent l'un dans l'autre et possèdent un fond de canal (20) commun en forme de cuvette, à la section transversale approximativement en forme de U, et les contours de contact de câble du dispositif de serrage (26) possèdent un plafond de mâchoire de serrage commun en forme de cuvette, à la section transversale approximativement en forme de U, une largeur (B) du fond de canal (20) et/ou du plafond de mâchoire de serrage entre des flancs latéraux de limite du fond de canal (20) et/ou du plafond de mâchoire de serrage étant égale au double du diamètre de câble du câble (8) non déformé ni soumis à une charge, une hauteur (H) du canal de guidage de câble entre le fond de canal (20) et le plafond de mâchoire de serrage étant inférieure au diamètre de câble du câble (8) non déformé ni soumis à une charge si bien que se produit, lors de la compression des brins de câble (11, 12) sur le fond de canal (20) par le plafond de mâchoire de serrage une déformation de section transversale des brins de câble (11, 12), qui donne lieu à une pression des brins de câble (11, 12) les uns contre les autres lorsque ladite largeur du fond de canal et du plafond de mâchoire de serrage (B) est égale au double du diamètre de câble.

4. Tambour à câble selon l'une des revendications précédentes, dans lequel l'élément de renvoi de câble (15) est réalisé sous la forme d'un bollard de renvoi (16) rigide disposé fixe sur le tambour à câble (1), dans lequel l'extrémité de câble (7) est enroulée tout autour du bollard de renvoi (16) à un angle d'enroulement selon lequel découle un frottement d'enroulement.

5. Tambour à câble selon la revendication précédente, dans lequel un collet (17), qui recouvre le câble (8) renvoyé autour du bollard de renvoi (16), est associé au bollard de renvoi (16), ledit collet (17) étant réalisé déplaçable de manière avantageuse dans la direction longitudinale du bollard de renvoi (16), en particulier apte à être précontraint pour serrer le câble (8) renvoyé autour du bollard de renvoi (16).

6. Tambour à câble selon l'une des revendications précédentes, dans lequel l'élément de renvoi de câble (15) comporte un verrou de serrage de câble (21) se serrant automatiquement lors d'une traction du câble, ledit verrou de serrage de câble possédant un bloc de serrage (23) fixe dans la direction de traction du câble (27) ainsi qu'un bloc de renvoi (22) monté mobile dans la direction de traction du câble (27), qui peut être déplacé contre le bloc de serrage (23) lors d'une traction du câble.

7. Tambour à câble selon la revendication précédente, dans lequel le bloc de serrage (23) possède une poche de réception, dans laquelle le bloc de renvoi (22) est disposé de manière coulissante et reçu au moins en partie.

8. Tambour à câble selon l'une des deux revendications précédentes, dans lequel le bloc de renvoi (22) possède des surfaces de contact de câble disposées sur des côtés opposés et le bloc de serrage (23) comporte des contours de serrage de câble (24) entourant le bloc de renvoi (22), qui sont disposés opposés auxdites surfaces de contact de câble du bloc de renvoi (22), de telle sorte que, entre le bloc de renvoi (22) et le bloc de serrage (23), un passage de câble en forme de fente est prévu pour le câble renvoyé autour du bloc de renvoi (22).

9. Tambour à câble selon la revendication précédente, dans lequel les contours de serrage de câble (24) du bloc de serrage (23) et/ou les surfaces de contact de câble du bloc de renvoi (22) s'amincissent, en particulier en forme de coin et/ou en forme d'entonnoir, dans la direction de traction du câble (27), dans lequel les contours de serrage de câble (24) du bloc de serrage (23) et/ou les surfaces de contact de câble du bloc de renvoi (22) possèdent un angle de coin compris entre 2 x 3° et 2 x 20°, de préférence entre 2 x 5° et 2 x 15°.

10. Tambour à câble selon l'une des revendications précédentes, dans lequel le dispositif de serrage (26) comporte des mâchoires de serrage (18) associées aux brins de câble (11, 12), lesquelles comportent des moyens de précontrainte (25u, 25o) associés séparément aux brins de câble (11, 12), qui peuvent être précontraints avec une force indépendante l'un par rapport à l'autre, de telle sorte que, par la précontrainte avec une force différente des moyens de précontrainte (25o, 25u) associés aux différents brins de câble (11, 12), différentes forces de serrage peuvent être réglées sur les différents brins de câble (11, 12).

11. Tambour à câble selon l'une des revendications précédentes, dans lequel le dispositif de fixation d'extrémité de câble (9) est disposé sur un côté extérieur de l'une des flasques (3).

12. Tambour à câble selon l'une des revendications précédentes, dans lequel le dispositif de fixation d'extrémité de câble (9), y compris le dispositif de serrage (26) et l'élément de renvoi de câble (15), forme un ensemble prémonté, qui peut être monté comme unité sur une des flasques (3).

13. Mécanisme à câble en fibres comprenant un tambour à câble (1), qui est réalisé selon l'une des revendications précédentes, ainsi qu'un câble en fibres (8) comprenant des fibres de matière plastique.
